# EUROPEAN PATENT APPLICATION

(11) **EP 4 617 152 A1**
(43) Date of publication of application: **17.09.2025**
(21) Application number: 25154948.1
(22) Date of filing: 30.01.2025
(51) Int. Cl.: B62D 25/08

(54) **LOWER VEHICLE-BODY STRUCTURE OF VEHICLE**

(30) Priority: 14.03.2024 JP 2024040206
(71) Applicant: MAZDA MOTOR CORPORATION, Hiroshima 730-8670 (JP)
(72) Inventor: MATSUDA, Yamato, Aki-gun, Hiroshima, 730-8670 (JP); KIYOTAKE, Shinji, Aki-gun, Hiroshima, 730-8670 (JP); HIRAKAWA, Taichi, Aki-gun, Hiroshima, 730-8670 (JP)
(74) Representative: Müller-Boré & Partner Patentanwälte PartG mbB

(57) **Abstract**

A hollow-shaped frame 3 constitutes a closed cross-section portion 3s, which extends in a front-rear direction. The frame 3 includes a narrowed width portion 37 at a part of the frame 3 adjacent to a vehicle-width-direction inner side of a suspension housing 4. The suspension housing 4 is provided to the frame 3 and supports a suspension. A cross member 55 is provided inward of the frame 3 in the vehicle width direction. The cross member 55 is disposed at the same front-rear position as the suspension housing 4. A joint member 60 is provided to the narrowed width portion 37. The joint member 60 connects the suspension housing 4 with the cross member 55 in such a way as to allow transmission of an input load from the suspension housing 4 to the cross member 55. The input load being input from the suspension.

## Description

### [Technical Field]

The present invention relates to a lower vehicle-body structure of a vehicle, particularly, a lower vehicle-body structure including a frame constituting a closed cross-section portion extending in the front-rear direction on the vehicle-width-direction outer side of a floor panel, and a suspension housing provided to the frame.

### [Background Art]

To obtain excellent steering stability and preferable riding comfort during normal traveling, it is important for a lower vehicle-body structure of a vehicle to ensure rigidity against a load input from a suspension via a suspension housing (hereinafter also referred to as "sus housing") that supports the suspension.

With reference to such a lower vehicle-body structure of a vehicle, conventionally, there is a configuration in which a frame constituting a closed cross-section portion extending in the front-rear direction is provided on the vehicle-width-direction outer side of a floor panel, and a suspension housing is provided on the vehicle-width-direction outer side of the frame. Recently, there is also a known structure in which a suspension housing is provided on a frame, as in the case of Patent Literature 1.

However, in the configuration in which the suspension housing is provided on the frame, a cross section of the frame in the vehicle width direction, that is, a dimension in the width direction of the frame, is reduced at a position around the suspension housing and hence, there is a possibility of insufficient rigidity of the frame itself.

The suspension housing disclosed in Patent Literature 1 is an aluminum die-cast suspension housing having a high degree of freedom in shape, thus being capable of easily ensuring desired rigidity by providing a rib to the suspension housing itself, for example, leading to reinforcement of the frame. On the other hand, it can be also considered to use, for a suspension housing provided on a frame, a suspension housing made of sheet metal which has advantages, such as allowing easy manufacture by the conventional manufacturing process compared with an aluminum die-cast suspension housing. However, when the suspension housing is made of sheet metal, the degree of freedom in shape is lower than that of the aluminum die-cast suspension housing, and weight tends to be increased to ensure rigidity.

In such a case, for example, when an input load toward the vehicle-width-direction inner side is transmitted from a suspension to a frame through a suspension housing due to vertical displacement of the suspension during normal traveling, there is a possibility that the frame cannot suppress inward falling deformation of a sheet-metal-made suspension housing toward the frame, the suspension housing having a low degree of freedom in shape and having a tendency of increasing weight so as to ensure rigidity. As a result, there is a possibility of steering stability or riding comfort being adversely affected.

In addition, in the configuration in which the suspension housing is provided on the frame, due to the structure thereof, a cross section of the frame in the vehicle width direction is reduced at a position around the suspension housing and hence, there is a possibility of bending deformation of the frame being caused at a position around the suspension housing in a rear-end collision. In the case of an aluminum die-cast frame, by utilizing the degree of freedom in shape, it is possible to ensure rigidity that can suppress bending deformation. On the other hand, in the case of a frame made of sheet metal, it is difficult to enhance rigidity by changing a shape and hence, an excessive increase in mass is required to suppress bending deformation, so that there is room for improvement.

### [Citation List]

### [Patent Literature]

[Patent Literature 1] Japanese Patent Laid-Open No. 2023-035561

### [Summary]

### [Problems to be Solved]

The present invention has been made in view of such a problem, and it is an object of the present invention to provide a lower vehicle-body structure of a vehicle that can obtain steering stability and/or riding comfort.

### [Means for Solving the Problem]

The invention is defined in claim 1. Particularly, a lower vehicle-body structure of a vehicle includes a frame that constitutes a closed cross-section portion extending in a front-rear direction on a vehicle-width-direction outer side of a floor panel; and a suspension housing, which may be made of sheet metal. The suspension housing is provided to the frame, and supporting a suspension. The suspension housing includes a damper mounting surface portion which may extend along an upper surface of the frame and a peripheral wall extending downward from a peripheral edge of the damper mounting surface portion. The frame includes a narrowed width portion in which a dimension in a vehicle width direction of the closed cross-section portion is reduced. Particularly, at a part of the frame adjacent to a vehicle-width-direction inner side of the suspension housing, the frame includes a narrowed width portion in which a dimension in a vehicle width direction of the closed cross-section portion is reduced compared with a part of the frame adjacent to the suspension housing in the front-rear direction. The lower vehicle-body structure further includes a cross member which is provided inward of the frame in the vehicle width direction. The cross member extends in the vehicle width direction and is disposed at a same front-rear position as the suspension housing, and a load transmission portion which is provided to the narrowed width portion. The load transmission portion connects the suspension housing with the cross member. Particularly, the load transmission portion connects the suspension housing with the cross member in such a way as to allow transmission of an input load from the suspension housing to the cross member. The input load being input from the suspension.

With such a configuration, a load toward the vehicle-width-direction inner side that is input from the suspension housing during normal traveling is transmitted to the cross member through the load transmission portion and hence, it is possible to suppress inward falling deformation of the suspension housing. In addition, although the narrowed width portion having low rigidity tends to be bent and deformed in a rear-end collision, the cross member can suppress bending deformation of the narrowed width portion.

Accordingly, it is possible to obtain excellent steering stability and preferable riding comfort during normal traveling, and it is possible to ensure rigidity of the lower portion of the vehicle body against a rear-end collision load in a rear-end collision.

A front-rear position of the load transmission portion may overlap with a front-rear position of an opening portion formed in the damper mounting surface portion in a penetrating manner in an up-down direction.

In the damper mounting surface portion, the opening portion is the mounting center of the damper and hence, a front-rear position that overlaps with the opening portion receives a large input load from the suspension. However, with such a configuration, the load transmission portion is provided at such a position and hence, it is possible to efficiently support the suspension housing. Accordingly, it is possible to suppress inward falling deformation of the suspension housing against an input load toward the vehicle-width-direction inner side from the suspension.

A vehicle-width-direction inner side of the frame may have an inner flange portion to which the floor panel is fixed, the load transmission portion may include a connecting surface portion that connects a vehicle-width-direction inner part of the peripheral wall with the inner flange portion such that the connecting surface portion extends downward toward a vehicle-width-direction inner side, and the floor panel may be provided in such a way as to linearly extend in the vehicle width direction at a height position of a first inner fixation portion at which the connecting surface portion is fixed to the inner flange portion, the floor panel constituting, in cooperation with the cross member, a closed cross-section portion extending in the vehicle width direction.

With such a configuration, the cross member can efficiently transmit a load toward the vehicle-width-direction inner side in cooperation with the floor panel, the load being input to the suspension housing from the suspension during normal traveling, and being transmitted through the connecting surface portion.

The cross member may include a lower wall extending in the front-rear direction, and side walls extending upward from both front and rear end portions of the lower wall, and a front-rear position of at least one of a front ridge and a rear ridge may overlap with a front-rear position of the load transmission portion, the front ridge being formed in the vehicle width direction by a corner portion between the lower wall and a front side wall of the side walls, the rear ridge being formed in the vehicle width direction by a corner portion between the lower wall and a rear side wall of the side walls.

With such a configuration, the front-rear position of the front ridge or the rear ridge of the cross member overlaps with the front-rear position of the load transmission portion, the front ridge and the rear ridge extending in the vehicle width direction and hence, it is possible to increase efficiency of transmitting a load from the suspension to the cross member through the load transmission portion.

The front-rear position of the at least one of the front ridge and the rear ridge of the cross member may overlap with a front-rear position of a ridge formed on the load transmission portion in the vehicle width direction.

With such a configuration, when a load is input from the suspension during normal traveling, the load can be transmitted along the ridges formed on the load transmission portion and the cross member and hence, it is possible to further increase efficiency of transmitting the load from the load transmission portion to the cross member.

A front-rear position of a second inner fixation portion may overlap with a front-rear position of an outer fixation portion, the load transmission portion being fixed to an inner wall of the frame from an outer side in the vehicle width direction at the second inner fixation portion, the cross member being fixed to the inner wall of the frame from an inner side in the vehicle width direction at the outer fixation portion.

With such a configuration, when a load is input from the suspension during normal traveling, it is possible to further increase efficiency of transmitting the load from the load transmission portion to the cross member through the frame.

The load transmission portion may be formed into a shape having a lower opening therein that is open downward in cross section in the front-rear direction, and the load transmission portion may be fixed to the frame such that the lower opening is closed by a lower wall of the frame.

With such a configuration, the load transmission portion can constitute the closed cross-section between the load transmission portion and the lower wall of the frame in cooperation with the frame, which closes the lower opening, and hence, it is possible to increase rigidity of the load transmission portion.

Accordingly, it is possible to further suppress the inward falling deformation of the suspension housing during normal traveling, and bending deformation of the narrowed width portion in a rear-end collision.

A front-rear position of a lower fixation portion may overlap with a front-rear position of the load transmission portion, the cross member being fixed to a lower wall of the frame from below at the lower fixation portion.

With such a configuration, the front-rear position of the lower fixation portion overlaps with the front-rear position of the load transmission portion and hence, it is possible to increase efficiency of transmitting a load from the suspension to the cross member through the load transmission portion.

The frame may include a frame front portion and a frame rear portion, and the load transmission portion may be fixed to a coupled part at which the frame front portion and the frame rear portion are superimposed on each other.

With such a configuration, it is possible to reinforce the coupled part between the frame front portion and the frame rear portion by the load transmission portion fixed to the coupled part and it is possible to enhance efficiency of transmitting a load from the load transmission portion to the frame when the load is input from the suspension to the suspension housing toward the vehicle-width-direction inner side during normal traveling.

### [Effect of Invention]

According to the present invention, it is possible to provide a lower vehicle-body structure of a vehicle that can suppress inward falling deformation of the suspension housing even when a load toward the vehicle-width-direction inner side is transmitted from the suspension housing during normal traveling, and that can suppress bending deformation of the frame in a rear-end collision, the lower vehicle-body structure having a configuration in which the suspension housing is provided on the frame while an excessive increase in mass is suppressed, a cross section of the frame in the vehicle width direction is reduced at a position around the suspension housing, and the suspension housing is made of sheet metal.

### [Brief Description of Drawings]

FIG. 1 is a perspective cross-sectional view of a lower vehicle-body structure of the present embodiment as viewed from a trunk side.
FIG. 2 is an enlarged cross-sectional view showing a main part taken along line A-A in FIG. 1.
FIG. 3 is a perspective cross-sectional view taken along line B-B in FIG. 2, as viewed from above.
FIG. 4 is an enlarged view of a main part of a suspension housing and an area around the suspension housing with a portion of a rear frame shown in FIG. 1 omitted.
FIG. 5 is an enlarged cross-sectional view taken along line C-C in FIG. 4.
FIG. 6 is an enlarged cross-sectional view taken along line D-D in FIG. 4.
FIG. 7 is an end view showing a main part taken along line D-D in FIG. 4.
FIG. 8 is an enlarged cross-sectional view showing a main part taken along line E-E in FIG. 4.
FIG. 9 is an enlarged cross-sectional view showing a main part taken along line G-G in FIG. 4.
FIG. 10(a) is a diagram as viewed in the direction of arrow Da in FIG. 4, and FIG. 10(b) is an enlarged cross-sectional view taken along line H-H in FIG. 10(a).

### [Embodiment for Carrying Out the Invention]

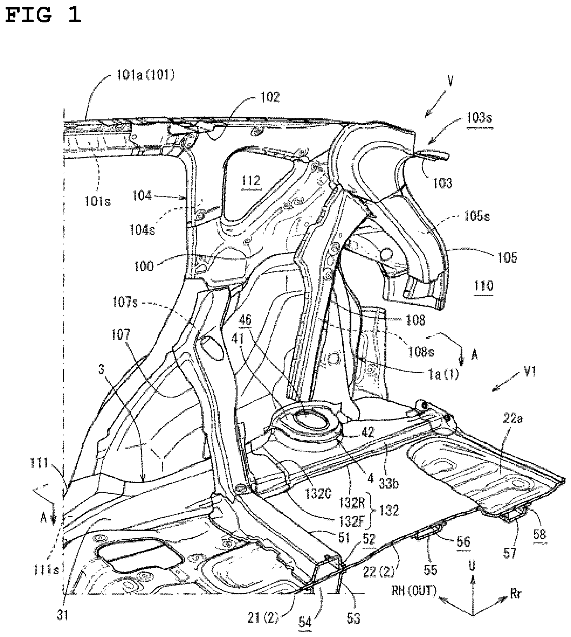

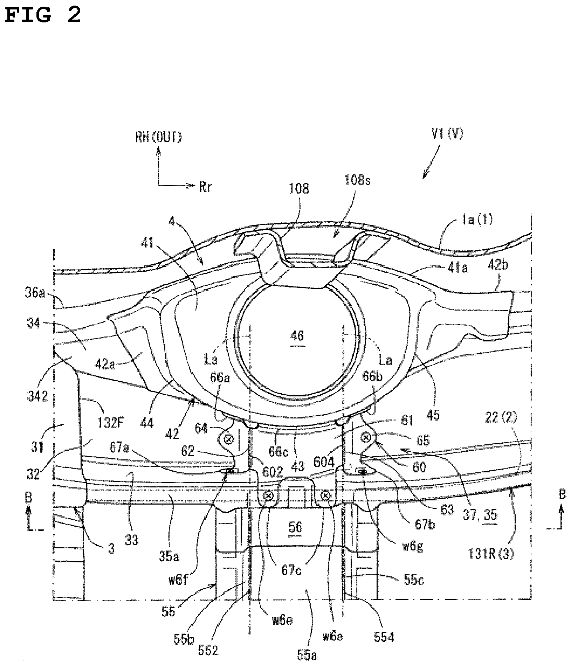

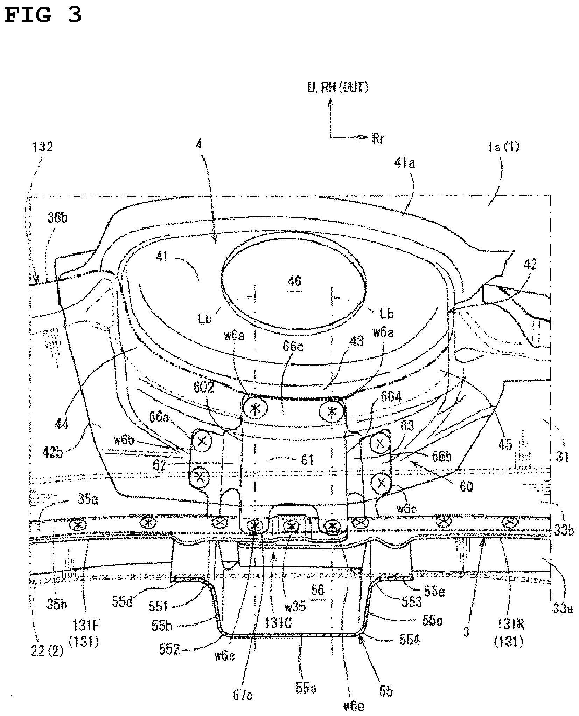

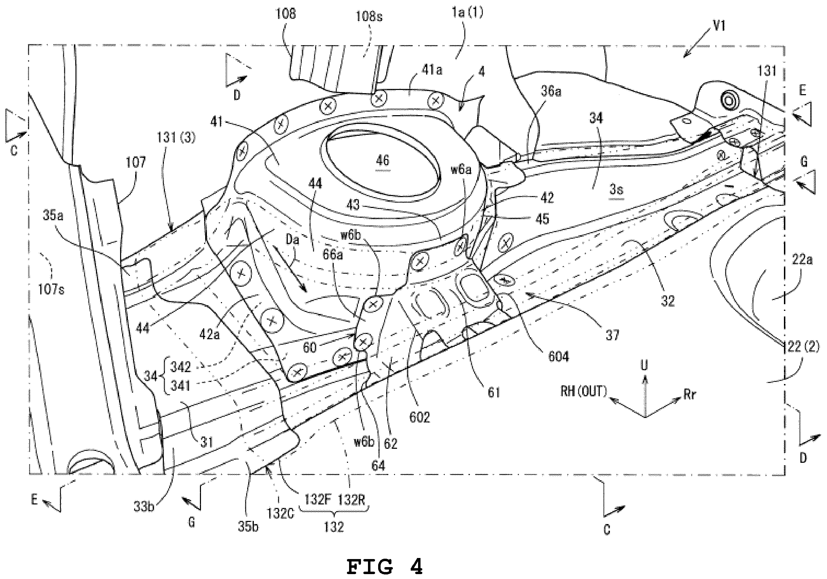

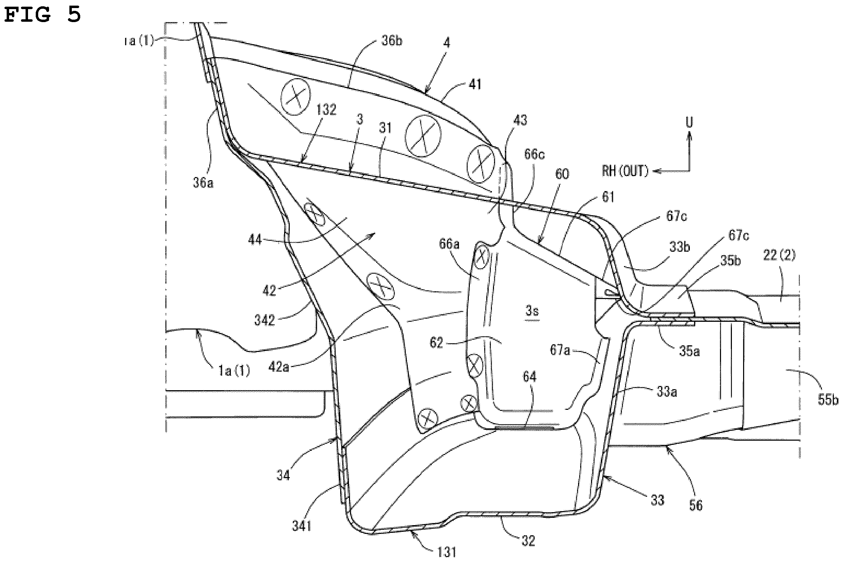

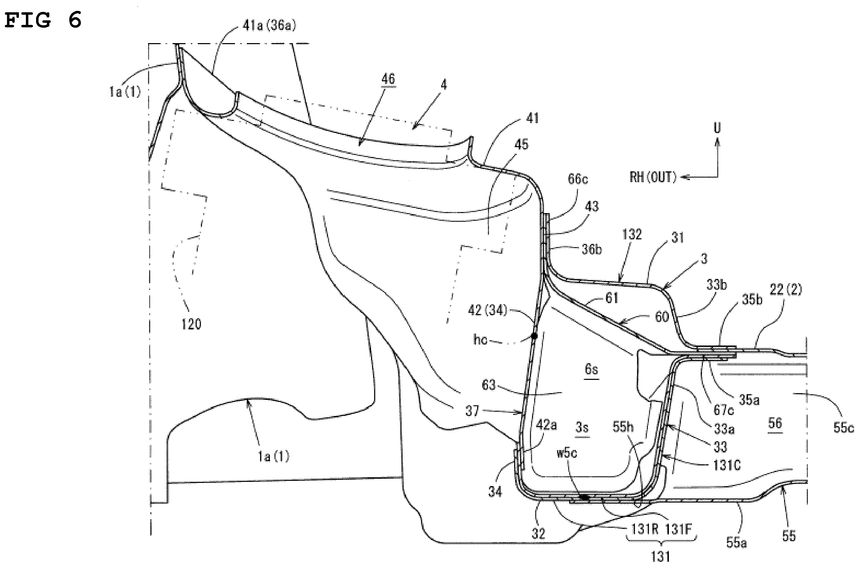

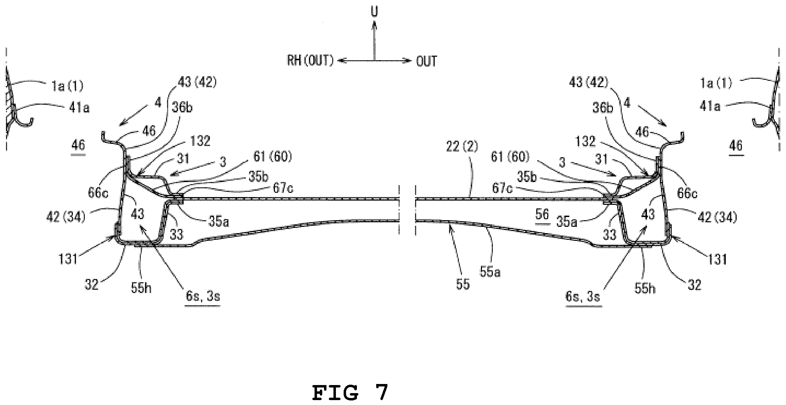

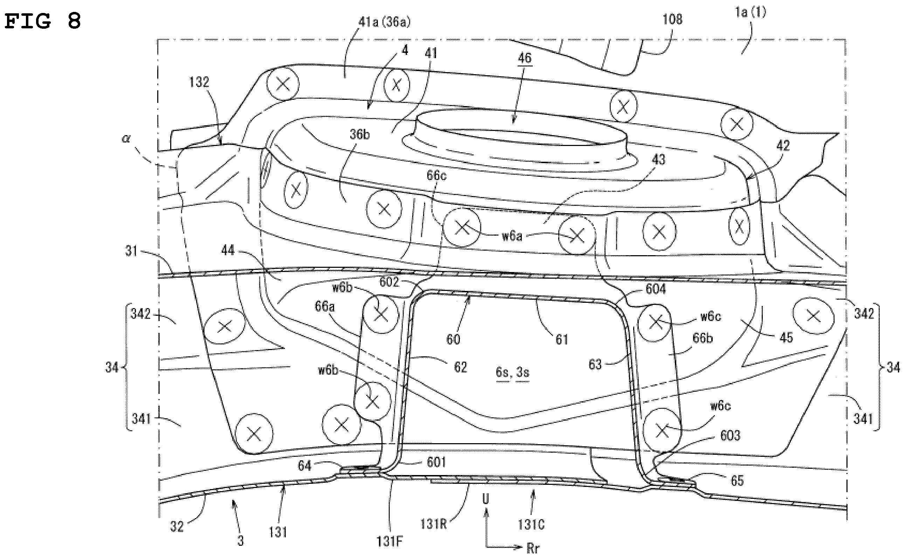

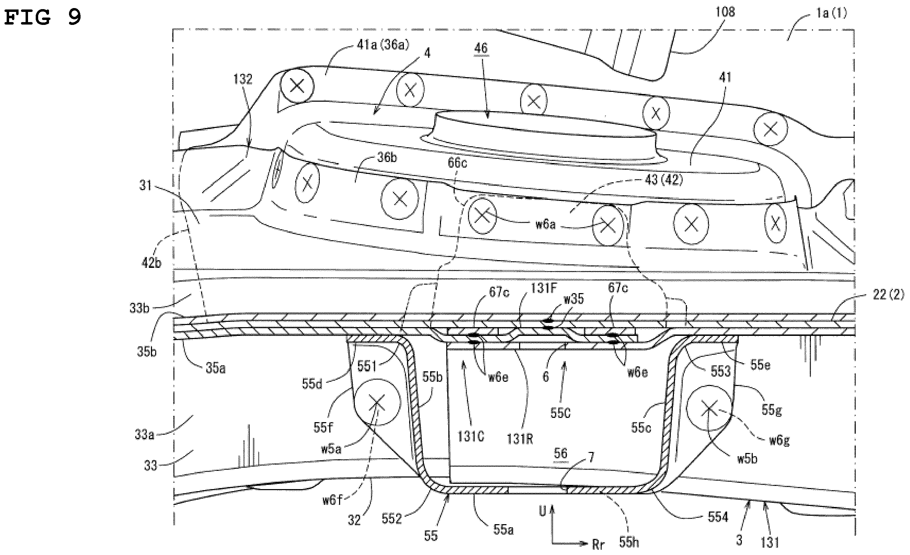

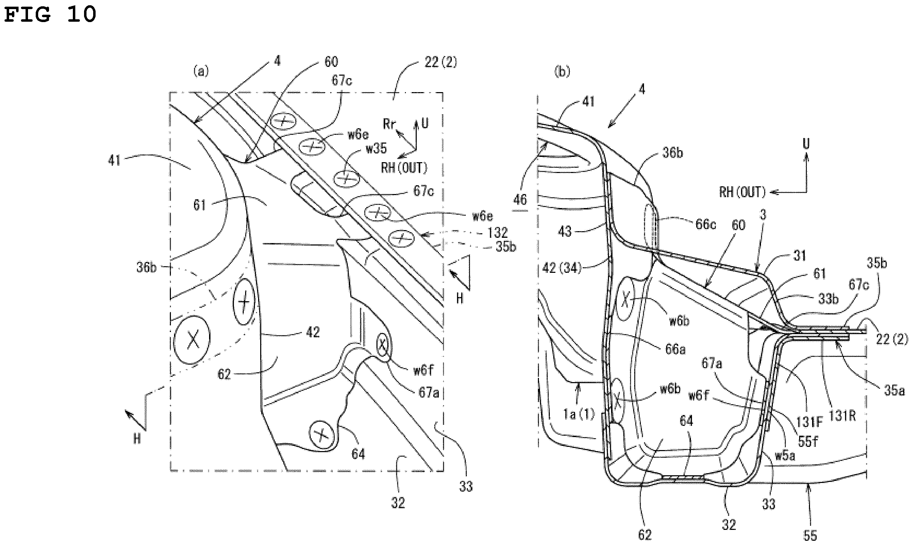

One embodiment of the present invention will be described in detail hereinafter with reference to drawings. The drawings show a lower vehicle-body structure V1 of an automobile of the present embodiment. FIG. 1 is a perspective cross-sectional view of a vehicle body rear portion V including the lower vehicle-body structure V1, taken along the front-rear direction at the intermediate position in the vehicle width direction, and as viewed from the trunk side. FIG. 2 is an enlarged cross-sectional view showing a main part taken along line A-A in FIG. 1, with an upper rear member 132R of a rear frame 3 (see FIG. 1) and a rear floor panel 2 (see FIG. 1) omitted. FIG. 3 is a perspective cross-sectional view taken along line B-B in FIG. 2, as viewed from above. FIG. 4 is an enlarged view of a main part of a suspension housing 4 and an area around the suspension housing 4 with the upper rear member 132R shown in FIG. 1 omitted. FIG. 5 is an enlarged cross-sectional view taken along line C-C in FIG. 4. FIG. 6 is an enlarged cross-sectional view taken along line D-D in FIG. 4. FIG. 7 is an end view showing a main part taken along line D-D in FIG. 4. FIG. 8 is an enlarged cross-sectional view showing a main part taken along line E-E in FIG. 4. FIG. 9 is an enlarged cross-sectional view showing a main part taken along line G-G in FIG. 4. FIG. 10(a) is a diagram as viewed in the direction of arrow Da in FIG. 4. FIG. 10(b) is an enlarged cross-sectional view taken along line H-H in FIG. 10 (a).

In the drawings, an arrow Rr indicates the rear side of the vehicle body, an arrow U indicates the upper side of the vehicle body, an arrow RH indicates the right side of the vehicle body, and an arrow OUT indicates the vehicle-width-direction outer side. In the description made hereinafter, respective directions, that is, the front direction, the rear direction, the left direction, the right direction, the upward direction, and the downward direction, indicate the respective directions of the vehicle body, that is, the front direction, the rear direction, the left direction, the right direction, the upward direction, and the downward direction of the vehicle body unless otherwise specifically indicated, and the above-mentioned respective directions of the vehicle body are based on the occupant seated on the driver's seat.

The lower vehicle-body structure V1 of an automobile of the present embodiment may have a substantially bilaterally symmetric shape and hence, the description will be made based on the configuration of the vehicle body on the right side unless otherwise specifically indicated. In the drawings, a "cross" mark indicates a main spot welded portion, and a "circle" mark surrounding the "cross" mark indicates a welding range. In addition, reinforcement may be abbreviated as rein in the following description.

For example, the lower vehicle-body structure V1 of an automobile of the present embodiment is applied to the vehicle body rear portion V. Prior to the description of the lower vehicle-body structure V1, the structure of the region above and around the lower vehicle-body structure V1 in the vehicle body rear portion V will be described.

As shown in FIG. 1, the region above and around the lower vehicle-body structure V1 of the present embodiment may include a side panel 100, a roof side rail 101, a roof reinforcement 102, a rear header reinforcement 103, an intermediate pillar 104, a rear pillar 105, front and rear brace members 107, 108, and the like.

The side panel 100 is located above a wheel well inner (or a wheel housing inner) 1a described later, and forms the side wall of a trunk at the vehicle body rear portion V in cooperation with the wheel well inner 1a. The lower edge of the side panel 100 is joined to the upper edge of the wheel well inner 1a.

The roof side rail 101 may include a roof side rail inner 101a and a roof side rail outer not shown in the drawing, thus constituting a closed cross-section portion 101s extending in the front-rear direction of the vehicle at each end portion of a roof portion in the vehicle width direction, the roof portion forming the top surface of a vehicle cabin of the vehicle body.

The roof reinforcement 102 extends between the left and right roof side rails 101, and is joined to the lower surface of a roof panel in such a way as to be capable of supporting the roof panel of the roof portion. The roof panel extends in the vehicle width direction and the front-rear direction, and has a plate shape.

The rear header reinforcement 103 may constitute a closed cross-section portion 103s at the rear edge of the roof portion in cooperation with the rear end portion of the roof panel. For example, the closed cross-section portion 103s extends in the vehicle width direction. The rear header reinforcement 103 forms the upper edge of a rear trunk opening portion 110 that is open from the trunk side toward the rear side of the vehicle body.

The intermediate pillar 104 (or C pillar) may constitute a closed cross-section portion 104s extending in the up-down direction of the vehicle body. The intermediate pillar 10 connects the rear portion of the roof side rail 101 with the rear portion of a side sill 111.

The side sill 111 may be a vehicle body reinforcing member constituting a closed cross-section portion Ills extending in the front-rear direction on each of both the left and right end portions of a front floor panel not shown in the drawing and forming the floor surface of the vehicle cabin. The upper portion of the intermediate pillar 104 may constitute the front edge of a quarter window opening portion 112.

The intermediate pillar 104 may be disposed such that the intermediate portion of the intermediate pillar 104 in the up-down direction is located at the front edge portion of the side panel 100. The lower portion of the intermediate pillar 104 is located at the front edge portion of a rear wheel well (or a rear wheel housing) 1.

The rear pillar 105 (or D pillar) constitutes a closed cross-section portion 105s extending obliquely from the outer end in the vehicle width direction of the rear header reinforcement 103 toward the rear side as it goes downward so as to form the side edge of the rear trunk opening portion 110. The upper portion of the rear pillar 105 is joined to the rear edge of the side panel 100.

For example, both of the front and rear brace members 107, 108 are joined to the side panel 100 from the trunk side. Of the front and rear brace members 107, 108, the front brace member 107 may constitute a closed cross-section portion 107s extending in the up-down direction in such a way as to connect the lower portion of the intermediate pillar 104 with the outer edge in the vehicle width direction of a cross member upper portion 51 described later. Of the front and rear brace members 107, 108, the rear brace member 108 may constitute a closed cross-section portion 108s extending in the up-down direction in such a way as to connect the upper end portion of the rear pillar 105 with the portion of the wheel well inner 1a located directly above the suspension housing 4 described later.

Next, the lower vehicle-body structure V1 of an automobile of the present embodiment will be described.

As shown in FIG. 1 to FIG. 10, particularly in FIG. 1, the lower vehicle-body structure V1 of an automobile of the present embodiment includes the rear wheel well 1, the rear floor panel 2, the rear frame 3, the suspension housing 4, one or a plurality of rear cross members 51, 53, 55, 57, and the like.

The rear wheel well 1 may be provided directly below the side panel 100, and formed into an arch shape in which the intermediate part in the front-rear direction projects upward so as to allow housing of a rear wheel when the vehicle is viewed in a side view. For example, the rear wheel well 1 includes a wheel well outer (or a wheel housing outer) not shown in the drawing and the wheel well inner 1a. Particularly, the wheel well outer protruding outward in the vehicle width direction, and the wheel well inner 1a protrudes inward in the vehicle width direction. The peripheral edge portion of the wheel well inner 1a, excluding the lower end portion thereof, is joined to the peripheral edge portion of the wheel well outer, excluding the lower end portion thereof.

The rear floor panel 2 may be configured such that a rear seat pan 21 and a rear floor pan 22 are disposed on the front part and the rear part of the rear floor panel 2, thus forming an integral body or being integrally and continuously provided.

The rear seat pan 21 may be a rear floor provided at the front part for mounting a rear seat (rear-side seat) on the upper portion thereof. The above-described rear floor pan 22 is a rear floor provided at the rear part for forming a trunk floor. A trunk recessed portion 22a is recessed and formed at the rear portion of the rear floor pan 22.

As shown in FIG. 1, FIG. 7, and the like, the rear frames 3 are provided on both the left and right sides of the rear floor panel 2, and extend in the front-rear direction.

As shown in FIG. 1, the front end portions of the above-described rear frames 3 are provided in such a way as to overlap with the rear end portions of the side sills 111, provided on both the left and right sides of the front floor panel not shown in the drawing. In contrast, a rear bumper reinforcement not shown in the drawing and extending in the vehicle width direction may be connected to the rear end portions of the left and right rear frames 3 in such a way as to be able to absorb impact energy in a rear-end collision.

As shown in FIG. 5, and the like, the rear frame 3 includes an upper wall 31, a lower wall 32, an inner wall 33, and an outer wall 34. The upper wall 31 forms the upper surface of the rear frame 3 in the vehicle width direction. The lower wall 32 form the lower surface of the rear frame 3 in the vehicle width direction. The inner wall 33 vertically join the inner end in the vehicle width direction of the upper wall 31 and the inner end in the vehicle width direction of the lower wall 32 together. The outer wall 34 vertically joins the outer end in the vehicle width direction of the upper wall 31 and the outer end in the vehicle width direction of the lower wall 32 together.

The rear frame 3 includes a rear frame lower portion 131 and a rear frame upper portion 132. The rear frame lower portion 131 is open upward in cross section in the vehicle width direction. The rear frame upper portion 132 closes the opening of the rear frame lower portion 131 from above.

For example, the rear frame lower portion 131 is formed of the outer wall 34, the lower wall 32, an inner wall body portion 33a, which is a portion of the inner wall 33 that excludes the upper portion, a lower inner edge flange portion 35a, and a lower outer edge flange portion 36a. The rear frame lower portion 131 may be formed as an integral body by press forming steel sheets.

Particularly, the lower inner edge flange portion 35a is formed in such a way as to substantially horizontally project inward in the vehicle width direction from the upper end of the inner wall body portion 33a. Further particularly, the lower outer edge flange portion 36a is formed in such a way as to project upward from the upper end of the outer wall 34.

For example, the rear frame upper portion 132 is formed of the upper wall 31, an inner wall upper portion 33b corresponding to the upper portion of the inner wall 33, an upper inner edge flange portion 35b, and an upper outer edge flange portion 36b. The rear frame upper portion 132 may be formed as an integral body by press forming a steel sheet.

Particularly, the upper inner edge flange portion 35b is formed in such a way as to substantially horizontally project inward in the vehicle width direction from the lower end of the inner wall upper portion 33b. Further particularly, the upper outer edge flange portion 36b is formed in such a way as to project upward from the outer edge in the vehicle width direction of the upper wall 31.

The rear frame lower portion 131 and the rear frame upper portion 132 may be spot welded in a state in which the lower inner edge flange portion 35a and the upper inner edge flange portion 35b are superimposed on each other in the up-down direction, and in a state in which the upper outer edge flange portion 36b and the lower outer edge flange portion 36a are superimposed on each other in the vehicle width direction.

Consequently, the rear frame lower portion 131 and the rear frame upper portion 132 of the rear frame 3 constitute, in cooperation, a closed cross-section portion 3s extending in the front-rear direction, that is, constitute an inner space having a closed cross-sectional shape.

In constituting the closed cross-section portion 3s, as shown in FIG. 3 and FIG. 9, the upper inner edge flange portion 35b and the lower inner edge flange portion 35a of the rear frame lower portion 131 are superimposed on each other in a state of clamping the outer end in the vehicle width direction of the rear floor pan 22 from above and below, and these three sheets are joined together e.g., by spot welding. As shown in FIG. 3, a plurality of spot welded portions w35 are formed in the front-rear direction, these three sheets being superimposed on each other at the spot welded portions w35. Consequently, both end portions of the rear floor pan 22 in the vehicle width direction are connected to the left and right rear frames 3.

For example, as shown in FIG. 1 and FIG. 4, the rear frame 3 extends in the front-rear direction such that the middle portion of the rear frame 3 in the front-rear direction is disposed adjacent to the vehicle-width-direction inner side of the wheel well inner 1a having a vertical wall shape. As shown in FIG. 5, the lower outer edge flange portion 36a is joined e.g., by spot welding or the like to the wheel well inner 1a from the inner side in the vehicle width direction at this middle portion. Particularly, the upper outer edge flange portion 36b is joined to the lower outer edge flange portion 36a from the inner side in the vehicle width direction.

As shown in FIG. 1 and FIG. 4, the rear frame upper portion 132 of the rear frame 3 may include, as components thereof, an upper front member 132F and the upper rear member 132R at the front and rear part thereof. A connected portion between the rear portion of the upper front member 132F and the front portion of the upper rear member 132R forms a superimposed and connected part 132C at which the upper front member 132F and the upper rear member 132R are joined together in a state of being superimposed on each other in the front-rear direction.

In the same manner, as shown in FIG. 3, FIG. 4, FIG. 8, and FIG. 9, the rear frame lower portion 131 of the rear frame 3 may include, as components thereof, a lower front member 131F and a lower rear member 131R at the front and rear part thereof. A connected portion between the rear portion of the lower front member 131F and the front portion of the lower rear member 131R forms a superimposed and connected part 131C at which the lower front member 131F and the lower rear member 131R are joined together in a state of being superimposed on each other in the front-rear direction. The superimposed and connected part 132C is located forward of the superimposed and connected part 131C.

In the present embodiment, as shown in FIG. 3, and the like, at the superimposed and connected part 131C, the front portion of the lower rear member 131R may be disposed in such a way as to be superimposed on the rear portion of the lower front member 131F from below.

As shown in FIG. 1 and FIG. 4, the suspension housing 4 (or "sus housing 4") is provided to the rear frame 3. As shown in FIG. 6, the suspension housing 4 is a damper support portion that supports the upper end portion of a rear suspension damper 120 including a damper spring. The suspension housing 4 includes a damper mounting surface portion 41 and a peripheral wall 42. Particularly, the suspension housing 4 is made of sheet metal.

For example, the suspension housing 4 is provided to the rear frame 3 adjacent to the vehicle-width-direction inner side of the wheel well inner 1a. Particularly, the upper portion of the suspension housing 4 rises stepwise relative to the upper surface of the rear frame 3 located around the suspension housing 4, thus forming a portion of the upper surface of the rear frame 3.

The configurations of the suspension housing 4 and the peripheral part of the suspension housing 4 described above will be described later.

As shown in FIG. 1, the plurality of rear cross members 51, 53, 55, 57 described above include front rear-cross members 51, 53 disposed forward of the suspension housing 4, an intermediate rear cross member 55 located at the same front-rear position (or position in the front-rear direction) as the suspension housing 4, and a rear rear-cross member 57 disposed rearward of the suspension housing 4, and are disposed at intervals in the front-rear direction.

For example, the front rear-cross members 51, 53 include the cross member upper portion 51 (so-called No.4 cross member upper portion) and the cross member lower portion 53 (so-called No.4 cross member lower portion).

The cross member upper portion 51 may be constituted to have a hat shape that is open downward in cross section in the front-rear direction. The cross member lower portion 53 may be constituted to have a hat shape that is open upward in cross section in the front-rear direction.

The cross member upper portion 51 and the cross member lower portion 53 are joined to the boundary portion between the rear seat pan 21 and the rear floor pan 22 in a state of clamping the boundary portion from above and below. Closed cross-section portions 52, 54 extending in the vehicle width direction are constituted between the cross member upper portion 51 and the boundary portion and between the cross member lower portion 53 and the boundary portion. Particularly, both end portions in the width direction of the cross member upper portion 51 and the cross member lower portion 53 are connected to the corresponding left and right rear frames 3.

As shown in FIG. 1, both the intermediate rear cross member 55 and the rear rear-cross member 57 may be constituted to have a hat shape that is open upward in cross section in the front-rear direction, and are joined to the rear floor pan 22 from below, thus constituting closed cross-section portions 56, 58 between the intermediate rear cross member 55 and the rear floor pan 22 and between the rear rear-cross member 57 and the rear floor pan 22, the closed cross-section portions 56, 58 extending in the vehicle width direction. In addition, both the intermediate rear cross member 55 and the rear rear-cross member 57 extend in the width direction at positions below the rear floor pan 22. Particularly, both end portions of the intermediate rear cross member 55 and the rear rear-cross member 57 in the width direction are connected to the corresponding left and right rear frames 3.

As shown in FIG. 3, FIG. 6, FIG. 7, and FIG. 9, the intermediate rear cross member 55 may be provided at the same front-rear position as the superimposed and connected part 131C at which the rear end portion of the lower front member 131F of the rear frame 3 and the front end portion of the lower rear member 131R of the rear frame 3 are connected in a state of being superimposed on each other in the front-rear direction.

The configuration of the intermediate rear cross member 55 will be described in more detail.

For example, as shown in FIG. 3 and FIG. 9, the intermediate rear cross member 55 includes a lower wall 55a, a front wall 55b and a rear wall 55c, a front edge flange portion 55d, and a rear edge flange portion 55e. Particularly, the front wall 55b and the rear wall 55c extending upward from both the front and rear ends of the lower wall 55a. Further particularly, the front edge flange portion 55d extends forward from the upper end of the front wall 55b. Further particularly, the rear edge flange portion 55e extends rearward from the upper end of the rear wall 55c. The intermediate rear cross member 55 is constituted to have a hat shape having an upper opening in cross section in the front-rear direction.

As shown in FIG. 1, the front edge flange portion 55d and the rear edge flange portion 55e of the intermediate rear cross member 55, excluding both end portions thereof in the vehicle width direction, may be joined to the rear floor pan 22 from below. Consequently, the closed cross-section portion 56 linearly extending in the vehicle width direction is constituted between the intermediate rear cross member 55 and the rear floor pan 22.

As shown in FIG. 3 and FIG. 9, in the intermediate rear cross member 55, a ridge extending linearly in the vehicle width direction may be formed at each of the corner portion between the front wall 55b and the front edge flange portion 55d, the corner portion between the front wall 55b and the lower wall 55a, the corner portion between the rear wall 55c and the rear edge flange portion 55e, and the corner portion between the rear wall 55c and the lower wall 55a. The plurality of ridges are taken as a front upper ridge 551, a front lower ridge 552, a rear upper ridge 553, and a rear lower ridge 554 in the order of the corner portions described above.

In addition, as shown in FIG. 6, FIG. 7, and FIG. 9, front outer edge flange portions 55f, rear outer edge flange portions 55g, and lower outer edge flange portions 55h may be provided to both end portions of the intermediate rear cross member 55 in the vehicle width direction.

For example, as shown in FIG. 9, the front outer edge flange portions 55f are formed in such a way as to project forward relative to the front wall 55b and to project downward relative to the front edge flange portion 55d at both end portions of the intermediate rear cross member 55 in the vehicle width direction, and are spot welded to the inner walls 33 of the rear frames 3.

Particularly, the rear outer edge flange portions 55g are formed in such a way as to project rearward relative to the rear wall 55c and to project downward relative to the rear edge flange portion 55e at both end portions of the intermediate rear cross member 55 in the vehicle width direction, and are spot welded to the inner walls 33 of the rear frames 3.

Further particularly, as shown in FIG. 6 and FIG. 7, the lower outer edge flange portions 55h are formed in such a way as to project outward in the vehicle width direction relative to the lower wall 55a at both end portions of the intermediate rear cross member 55 in the vehicle width direction, and are spot welded to the lower walls 32 of the superimposed and connected parts 131C of the rear frames 3. Thus, both end portions of the intermediate rear cross member 55 in the width direction are connected to the corresponding left and right rear frames 3 as described above.

Of the "cross" marks in FIG. 9, the "cross" marks relating to the intermediate rear cross member 55 show spot welded portions at which the intermediate rear cross member 55 is spot welded to the rear frame 3. Of the plurality of spot welded portions, a spot welded portion at the front outer edge flange portion 55f of the intermediate rear cross member 55 is taken as a front outer fixation portion w5a, and a spot welded portion at the rear outer edge flange portion 55g of the intermediate rear cross member 55 is taken as a rear outer fixation portion w5b. As shown in FIG. 6, a spot welded portion at the lower outer edge flange portion 55h of the intermediate rear cross member 55 is taken as a lower outer fixation portion w5c.

The configurations of the suspension housing 4 and the peripheral part of the suspension housing 4, as a continuation, will be described in detail.

As described above, the suspension housing 4 includes the damper mounting surface portion 41 and the peripheral wall 42 (see FIG. 2 to FIG. 5, FIG. 6, FIG. 8, and FIG. 9).

The damper mounting surface portion 41 corresponds to the upper surface of the suspension housing 4, and may be formed into a flat plate shape extending along the upper surface of the rear frame 3. An opening portion 46 is formed at the center portion of the damper mounting surface portion 41, as viewed in a plan view, in a penetrating manner in the up-down direction.

The rear suspension damper 120 (see FIG. 6) is mounted at the peripheral edge of the opening portion 46 of the damper mounting surface portion 41 from the lower surface side e.g., in a state in which the top portion, that is, a damper top, projects upward from the opening portion 46.

As shown in FIG. 6, the damper mounting surface portion 41 may be formed into an inclined surface shape that is substantially linearly inclined downward toward the vehicle-width-direction inner side. With such a shape, the rear suspension damper 120 is attached to the damper mounting surface portion 41 in an attitude in which the rear suspension damper 120 is slightly inclined downward toward the vehicle-width-direction outer side. For this reason, due to vertical displacement of the suspension during normal traveling, not only a load in the up-down direction but also a load toward the vehicle-width-direction inner side are input to the vehicle body from the rear suspension.

As shown in FIG. 3, FIG. 5, and FIG. 6, the peripheral wall 42 may be formed into a plate shape that extends downward from the peripheral edge of the damper mounting surface portion 41 located above the peripheral wall 42, that is, formed into a vertical wall shape, excluding the edge portion on the vehicle-width-direction outer side. As shown in FIG. 3 and the like, the peripheral wall 42 may include a peripheral wall inner portion 43. The peripheral wall 42 includes one or more first partition walls, particularly a front first partition wall 44 and a rear first partition wall 45.

The peripheral wall inner portion 43 is located on the vehicle-width-direction inner side. Particularly, the front first partition wall 44 is located forward relative to the peripheral wall inner portion 43. Further particularly, the rear first partition wall 45 is located rearward relative to the peripheral wall inner portion 43.

The front first partition wall 44 and the rear first partition wall 45 are disposed so as to form a pair in the front-rear direction with the peripheral wall inner portion 43 interposed therebetween. The front first partition wall 44 may have a curved shape to form the front surface of the peripheral wall 42.

Particularly, the curved shape directs toward the vehicle-width-direction outer side as a distance from the peripheral wall inner portion 43 toward the front side increases. In other words, the front first partition wall 44 may extend outward and forward from the peripheral wall inner portion 43.

The rear first partition wall 45 may have a curved shape to form the rear surface of the peripheral wall 42. Particularly, the curved shape directing toward the vehicle-width-direction outer side as a distance from the peripheral wall inner portion 43 toward the rear side increases. In other words, the rear first partition wall 45 may extend outward and rearward from the peripheral wall inner portion 43.

Consequently, as shown in FIG. 5 and FIG. 6, the peripheral wall 42 is formed into a curved surface shape that, as viewed in a plan view, bulges into a substantially semi-circular arc shape toward the closed cross-section portion 3s (inner space) of the rear frame 3, relative to the part of the outer wall 34 of the rear frame 3 adjacent to the suspension housing 4 in the front-rear direction. The peripheral wall 42 that is formed to bulge toward the closed cross-section portion 3s in this manner also serves as at least a portion of a part of the outer wall 34 of the rear frame 3, the part corresponding to the suspension housing 4 in the front-rear direction.

In contrast, as shown in FIG. 5 and FIG. 8, the part of the outer wall 34 of the rear frame 3 adjacent to the suspension housing 4 in the front-rear direction includes an outer wall lower portion 341 and an outer wall upper portion 342. Particularly, the outer wall lower portion 341 extending substantially vertically upward from the lower wall 55a of the rear frame 3. Further particularly, the outer wall upper portion 342 is further inclined outward in the vehicle width direction as a distance from the upper end of a first part toward the upper side increases.

For example, as shown in FIG. 6, the part of the outer wall 34 of the rear frame 3 which corresponds to the suspension housing 4 has a shape locally recessed inward in the vehicle width direction relative to the part of the outer wall adjacent to the suspension housing 4 in the front-rear direction as the peripheral wall 42. Therefore, at the part of the rear frame 3 adjacent to the vehicle-width-direction inner side of the suspension housing 4, a narrowed width portion (or a reduced width portion or a narrow width portion) 37 is constituted in which a dimension in the width direction of the closed cross-section portion 3s of the rear frame 3 is reduced compared with the part of the rear frame 3 adjacent to the suspension housing 4 in the front-rear direction.

As shown in FIG. 2, a width of the narrowed width portion 37 in the vehicle width direction is smaller than a width of rear frame 3 in the vehicle width direction in front of the suspension housing 4 and/or a width of the rear frame 3 in the vehicle width direction behind the suspension housing 4. In other words, the rear frame 3 is curved along the suspension housing 4 at the narrowed width portion 37. Accordingly, the width of the narrowed width portion 37 in the vehicle width direction is changed along the suspension housing 4. The rear frame 3 may have the smallest width in the vehicle width direction at the narrowed width portion 37.

As shown in FIG. 6, a lower edge 42a of the peripheral wall 42 of the suspension housing 4 is joined and fixed e.g., by spot welding to the lower portion of the outer wall 34 from the inner side in the vehicle-width-direction. Particularly, the outer wall 34 rises upward from the outer end in the vehicle width direction of the lower wall 32 of the rear frame lower portion 131, thus having a flange shape.

As shown in FIG. 6, an outer edge flange portion 41a may be formed at each of the outer end in the vehicle width direction of the damper mounting surface portion 41 of the suspension housing 4 and the outer end in the vehicle width direction of the peripheral wall 42 of the suspension housing 4. As shown in FIG. 4, the outer edge flange portion 41a of the damper mounting surface portion 41 and the outer edge flange portion 41a of the peripheral wall 42 are joined e.g., by spot welding to the wheel well inner 1a, having a vertical wall shape, from the inner side in the vehicle width direction. Consequently, the suspension housing 4 is provided adjacent to the vehicle-width-direction inner side of the wheel well inner 1a so as to form a portion of the rear frame 3.

As shown in FIG. 5, FIG. 6, FIG. 8, and FIG. 9, at the front-rear position of the rear frame 3 which corresponds to the suspension housing 4, the outer edge flange portion 36b is joined e.g., by spot welding or the like along the upper portion of the peripheral wall 42, thus forming a portion of the peripheral wall 42. Particularly, the outer edge flange portion 36b is located on the vehicle-width-direction outer side of the rear frame upper portion 132.

As shown in FIG. 2 to FIG. 6, and FIG. 8, the lower vehicle-body structure V1 of an automobile of the present embodiment may further include a joint member 60 in the closed cross-section portion 3s at the narrowed width portion 37 of the rear frame 3. Particularly, the joint member 60 serves as a load transmission portion that connects the suspension housing 4 with the intermediate rear cross member 55.

For example, the joint member 60 may be provided at a portion where the rear frame 3 has the smallest width in the vehicle width direction. The joint member 60 may be shifted from the portion where the rear frame 3 has the smallest width in the vehicle width direction.

For example, as shown in FIG. 8, and the like, the joint member 60 includes a connecting surface portion 61, a front second partition wall 62, a rear second partition wall 63, a front edge flange portion 64, and a rear edge flange portion 65. Particularly, the connecting surface portion 61 serves as an upper wall (upper surface portion). Further particularly, the front second partition wall 62 serves as a front wall extending downward from the front end of the connecting surface portion 61. Further particularly, the rear second partition wall 63 serves as a rear wall extending downward from the rear end of the connecting surface portion 61. Accordingly, the joint member 60 substantially has a box shape.

Further particularly, the front edge flange portion 64 extends forward from the lower end of the front second partition wall 62. Further particularly, the rear edge flange portion 65 extends rearward from the lower end of the rear second partition wall 63. The joint member 60 may be constituted to have a hat shape having a lower opening in cross section in the front-rear direction.

For example, the front edge flange portion 64 and the rear edge flange portion 65 of the joint member 60 are joined to the lower wall 32 of the rear frame 3 from above such that the lower opening is closed by the lower wall 32 of the rear frame 3, so that a closed cross-section portion 6s linearly extending in the vehicle width direction is constituted between the joint member 60 and the lower wall 32 of the rear frame 3.

Further particularly, in the joint member 60, a ridge extending linearly in the vehicle width direction is formed at each of the corner portion between the front second partition wall 62 and the front edge flange portion 64, the corner portion between the front second partition wall 62 and the connecting surface portion 61, the corner portion between the rear second partition wall 63 and the rear edge flange portion 65, and the corner portion between the rear second partition wall 63 and the connecting surface portion 61. The plurality of ridges are taken as a front lower ridge 601, a front upper ridge 602, a rear lower ridge 603, and a rear upper ridge 604 in the order of the corner portions described above.

As shown in FIG. 2, the front-rear positions of the front lower ridge 552 and the rear lower ridge 554 of the intermediate rear cross member 55 described above may overlap with the front-rear position of the joint member 60. Particularly, in the present embodiment, as shown by virtual straight lines La in FIG. 2, the front-rear position of the front lower ridge 552 of the intermediate rear cross member 55 overlaps with the front-rear position of the front upper ridge 602 of the joint member 60, and the front-rear position of the rear lower ridge 554 of the intermediate rear cross member 55 overlaps with the front-rear position of the rear upper ridge 604 of the joint member 60.

As shown in FIG. 3 and FIG. 8, a front outer edge flange portion 66a, a rear outer edge flange portion 66b, and an upper outer edge flange portion 66c may be provided to the outer edge of the joint member 60 in the vehicle width direction.

The front outer edge flange portion 66a is formed in such a way as to project forward relative to the front second partition wall 62 at the outer end portion in the vehicle width direction of the joint member 60, and is joined and fixed e.g., by spot welding to the vehicle-width-direction inner part of the front first partition wall 44 of the peripheral wall 42 in a state of being superimposed from the inner side in the vehicle width direction. The rear outer edge flange portion 66b is formed in such a way as to project rearward relative to the rear second partition wall 63 at the outer end portion in the vehicle width direction of the joint member 60, and is joined and fixed e.g., by spot welding to the vehicle-width-direction inner part of the rear first partition wall 45 of the peripheral wall 42 in a state of being superimposed from the inner side in the vehicle width direction.

The upper outer edge flange portion 66c is formed in such a way as to project upward from the outer end portion in the vehicle width direction of the connecting surface portion 61 of the joint member 60, and is joined and fixed e.g., by spot welding to the peripheral wall inner portion 43 of the peripheral wall 42 in a state of being superimposed from the inner side in the vehicle width direction.

For example, as shown in FIG. 2, a front inner edge flange portion 67a, a rear inner edge flange portion 67b, and upper inner edge flange portions 67c are provided to the inner edge of the joint member 60 in the vehicle width direction.

As shown in FIG. 2 and FIG. 5, the front inner edge flange portion 67a is formed in such a way as to project forward relative to the front second partition wall 62 at the inner end portion in the vehicle width direction of the joint member 60, and is joined and fixed e.g., by spot welding to the inner wall 33 of the rear frame 3 in a state of being superimposed from the outer side in the vehicle width direction. As shown in FIG. 2, the rear inner edge flange portion 67b is formed in such a way as to project rearward relative to the rear second partition wall 63 at the inner end portion in the vehicle width direction of the joint member 60, and is joined and fixed e.g., by spot welding to the inner wall 33 of the rear frame 3 in a state of being superimposed from the outer side in the vehicle width direction.

As shown in FIG. 2 and FIG. 3, the front and rear upper inner edge flange portions 67c form a pair of upper inner edge flange portions that project inward in the vehicle width direction from the inner end portion in the vehicle width direction of the connecting surface portion 61 of the joint member 60, and both of the front and rear upper inner edge flange portions 67c are joined and fixed e.g., by spot welding to the lower inner edge flange portion 35a of the rear frame lower portion 131 in a state of being superimposed from above.

Joining of the front and rear upper inner edge flange portions 67c of the joint member 60 to the lower inner edge flange portion 35a of the rear frame lower portion 131 will be described in more detail.

For example, in joining the front and rear upper inner edge flange portions 67c to the lower inner edge flange portion 35a of the rear frame lower portion 131, as shown in FIG. 3 and FIG. 9, at the superimposed and connected part 131C between the rear portion of the lower front member 131F and the front portion of the lower rear member 131R of the rear frame 3, the front and rear upper inner edge flange portions 67c of the joint member 60 and the rear portion of the lower front member 131F of the rear frame 3 are superimposed on the front portion of the lower rear member 131R of the rear frame 3 in a state of clamping the front portion of the lower rear member 131R of the rear frame 3 from above and below, and these three sheets are integrally joined together e.g., by spot welding.

Consequently, as shown in FIG. 3 and FIG. 6, the front-rear position of the connecting surface portion 61 of the joint member 60 overlaps with the front-rear position of the superimposed and connected part 131C of the rear frame 3, and the connecting surface portion 61 is joined and fixed to the superimposed and connected part 131C via the upper inner edge flange portions 67c. Particularly, the connecting surface portion 61 is formed into a surface shape extending in the vehicle width direction and the front-rear direction.

As described above, at the front-rear position in the rear frame 3 which corresponds to the suspension housing 4, the joint member 60 connects the peripheral wall 42 with the vehicle-width-direction inner part of the rear frame 3 (the ridge extending in the front-rear direction at a position between the inner wall 33 and the lower inner edge flange portion 35a) in the vehicle width direction and hence, it is possible to partition the closed cross-section portion 3s of the rear frame 3 in the front-rear direction by both of the front second partition wall 62 or the rear second partition wall 63.

That is, as shown in FIG. 2 to FIG. 6, and FIG. 8, a configuration is adopted in which the front second partition wall 62 partitions the closed cross-section portion 3s of the rear frame 3 in the front-rear direction in cooperation with the front first partition wall 44, and/or the rear second partition wall 63 partitions the closed cross-section portion 3s of the rear frame 3 in cooperation with the rear first partition wall 45.

Particularly, as shown in FIG. 6, the connecting surface portion 61 of the joint member 60 is joined to the peripheral wall 42 via the upper outer edge flange portion 66c, and is joined to the inner edge flange of the rear frame lower portion 131 via the upper inner edge flange portions 67c. The upper outer edge flange portion 66c of the joint member 60 is joined and fixed to the peripheral wall inner portion 43 of the peripheral wall 42 at a position higher than an intermediate position hc of the peripheral wall 42 in the up-down direction.

Consequently, the position at which the upper outer edge flange portion 66c of the joint member 60 is joined to the peripheral wall 42 is located at a position higher than the position at which the upper inner edge flange portions 67c of the joint member 60 are joined to the lower inner edge flange portion 35a of the rear frame lower portion 131.

Thus, the connecting surface portion 61 of the joint member 60 connects the peripheral wall inner portion 43 of the peripheral wall 42 with the lower inner edge flange portion 35a of the rear frame 3 in the closed cross-section portion 3s at the narrowed width portion 37 in an attitude in which the connecting surface portion 61 is inclined or linearly inclined downward toward the vehicle-width-direction inner side.

As shown in FIG. 2 to FIG. 4, and FIG. 6 to FIG. 8, in the front-rear direction, the front-rear position of at least the connecting surface portion 61 of the joint member 60 may overlap with the front-rear position of the opening portion 46 formed in the damper mounting surface portion 41 in a penetrating manner. Particularly, in the present embodiment, the front-rear positions of the connecting surface portion 61, the front second partition wall 62, the rear second partition wall 63, the upper inner edge flange portions 67c, and the upper outer edge flange portion 66c of the joint member 60 overlap with the front-rear position of the opening portion 46 of the damper mounting surface portion 41.

As shown in FIG. 3 and FIG. 8, of the plurality of spot welded portions at which the joint member 60 is spot welded to the peripheral wall 42, spot welded portions at two positions, that is, front and rear positions, on the upper outer edge flange portion 66c of the joint member 60 are taken as upper outer fixation portions w6a, and spot welded portions at two positions, that is, upper and lower positions, on the front outer edge flange portion 66a are taken as front outer fixation portions w6b. Spot welded portions at two positions, that is, upper and lower positions, on the rear outer edge flange portion 66b are taken as rear outer fixation portions w6c.

As shown in FIG. 2, of the plurality of spot welded portions at which the joint member 60 is spot welded to the rear frame 3, spot welded portions at two positions, that is, front and rear positions, on the upper inner edge flange portions 67c of the joint member 60 are taken as upper inner fixation portions w6e, a spot welded portion on the front inner edge flange portion 67a is taken as a front inner fixation portion w6f, and a spot welded portion on the rear inner edge flange portion 67b is taken as a rear inner fixation portion w6g.

As shown by virtual straight lines Lb in FIG. 3, the front upper outer fixation portion w6a and the front upper inner fixation portion w6e may be provided at front-rear positions that overlap with each other. Particularly, the rear upper outer fixation portion w6a and the rear upper inner fixation portion w6e are provided at front-rear positions that overlap with each other.

As shown in FIG. 3 and FIG. 9, the above-mentioned spot welded portion w35 may be located between the front and rear upper inner fixation portions w6e at the superimposed and connected part 131C of the rear frame 3. Particularly, the lower inner edge flange portion 35a of the rear frame lower portion 131 and the upper inner edge flange portion 35b of the rear frame upper portion 132 may be integrally joined to each other in a state of clamping and being superimposed on, in the up-down direction, the outer edge in the vehicle width direction of the rear floor panel 2.

The rear floor pan 22 may be provided in such a way as to extend substantially horizontally and linearly in the vehicle width direction at a height position of the front and rear upper inner fixation portions w6e.

Symbols 6, 7 in FIG. 9 indicate through holes respectively formed in the lower rear member 131R and the intermediate rear cross member 55 in a penetrating manner so as to avoid interference of a welding gun with the front portion of the lower rear member 131R and the lower wall 55a of the intermediate rear cross member 55 in forming the spot welded portion w35, at which three sheets are superimposed on each other, at a position between the front and rear upper inner fixation portions w6e in the front-rear direction. For example, the welding gun is disposed below the front portion of the lower rear member 131R of the rear frame 3.

Particularly, as shown in FIG. 2, FIG. 9, Fig. 10(a), and Fig.10(b), the front-rear position of the front outer edge flange portion 55f of the intermediate rear cross member 55 overlaps with the front-rear position of the front inner edge flange portion 67a of the joint member 60. Further particularly, the front-rear position of the front outer fixation portion w5a of the intermediate rear cross member 55 overlaps with the front-rear position of the front inner fixation portion w6f of the joint member 60.

In the same manner, as shown in FIG. 2 and FIG. 9, the front-rear position of the rear outer edge flange portion 55g of the intermediate rear cross member 55 may overlap with the front-rear position of the rear inner edge flange portion 67b of the joint member 60. For example, as shown in FIG. 2 and FIG. 9, the front-rear position of the rear outer fixation portion w5b of the intermediate rear cross member 55 overlaps with the front-rear position of the rear inner fixation portion w6g of the joint member 60.

As shown in FIG. 6, the front-rear position of the lower outer edge flange portion 55h of the intermediate rear cross member 55, particularly, the front-rear position of the lower outer fixation portion w5c, may overlap with the front-rear position of the joint member 60, specifically, the front-rear position of the connecting surface portion 61.

For example, as shown in FIG. 2, FIG. 3, FIG. 6, FIG. 7, and FIG. 9, the intermediate rear cross member 55 is provided at the front-rear position that overlaps with the suspension housing 4. In the present embodiment, the intermediate rear cross member 55 may be disposed at the front-rear position that overlaps with the damper top, that is, the opening portion 46 of the damper mounting surface portion 41.

As shown in FIG. 1 and FIG. 4, the lower vehicle-body structure V1 of an automobile of the present embodiment described above includes the rear frame 3 that constitutes the closed cross-section portion 3s extending in the front-rear direction on the vehicle-width-direction outer side of the rear floor panel 2 (floor panel), and the suspension housing 4, which may be made of sheet metal. The suspension housing 4 is provided to the rear frame 3, and supports the rear suspension damper 120 (suspension) (see FIG. 6). As shown in FIG. 2 to FIG. 9, the suspension housing 4 includes the damper mounting surface portion 41 and the peripheral wall 42. The damper mounting surface portion 41 may extend along the upper surface of the rear frame 3. The peripheral wall 42 extends downward from the peripheral edge of the damper mounting surface portion 41. For example, as shown in FIG. 2 to FIG. 6, at the part of the rear frame 3 adjacent to the vehicle-width-direction inner side of the suspension housing 4, the rear frame 3 includes the narrowed width portion 37 in which a dimension in the vehicle width direction of the closed cross-section portion 3s is reduced compared with a part of the rear frame 3 adjacent to the suspension housing 4 in the front-rear direction. The intermediate rear cross member 55 (cross member) is provided inward of the rear frame 3 in the vehicle width direction. The intermediate rear cross member 55 extends in the vehicle width direction and being disposed at a same front-rear position as the suspension housing 4. The joint member 60 as a load transmission portion is provided to the narrowed width portion 37. The joint member 60 connects the suspension housing 4 with the intermediate rear cross member 55 e.g., in such a way as to allow transmission of an input load from the suspension housing 4 to the intermediate rear cross member 55. The input load is input from the rear suspension damper 120.

With such a configuration, a load toward the vehicle-width-direction inner side that is input from the suspension housing 4 during normal traveling is transmitted to the intermediate rear cross member 55 through the joint member 60 and hence, it is possible to suppress inward falling deformation of the suspension housing 4. In addition, although the narrowed width portion 37 having low rigidity tends to be bent and deformed in a rear-end collision, the intermediate rear cross member 55 can suppress bending deformation of the narrowed width portion 37.

Particularly, at a part of the rear frame 3 adjacent to the vehicle-width-direction inner side of the suspension housing 4, the rear frame 3 includes the narrowed width portion 37, in which the dimension in the vehicle width direction is reduced, thus tends to have a low rigidity in the vehicle width direction. However, in the present embodiment, at a position inward of the rear frame 3 in the vehicle width direction, the intermediate rear cross member 55 is provided at the same front-rear position as the narrowed width portion 37 and hence, even when bending of the narrowed width portion 37 toward, for example, the vehicle-width inner side is attempted in a rear-end collision, the intermediate rear cross member 55 is stretched and hence, it is possible to suppress bending deformation of the narrowed width portion 37 toward the vehicle-width inner side.

Further particularly, as shown in FIG. 2, FIG. 3, FIG. 6, and FIG. 8, the front-rear position of the joint member 60 overlaps with the front-rear position of the opening portion 46 formed in the damper mounting surface portion 41 in a penetrating manner in the up-down direction.

In the damper mounting surface portion 41, the opening portion 46 is the mounting center of the rear suspension damper 120 and hence, a front-rear position that overlaps with the front-rear position of the opening portion 46 receives a large input load from the rear suspension damper 120 during normal traveling. However, with such a configuration, the joint member 60 is provided at such a position and hence, it is possible to efficiently support the suspension housing 4. Accordingly, it is possible to suppress inward falling deformation of the suspension housing 4 against an input load toward the vehicle-width-direction inner side from the rear suspension damper 120 (see FIG. 6) during normal traveling.

Further particularly, as shown in FIG. 2, FIG. 3, FIG. 6, FIG. 7, and FIG. 9, the vehicle-width-direction inner side of the rear frame 3 may have the lower inner edge flange portion 35a (inner flange portion) to which the rear floor panel 2 is fixed. The joint member 60 may include the connecting surface portion 61 that connects the peripheral wall inner portion 43 (vehicle-width-direction inner part) of the peripheral wall 42 with the lower inner edge flange portion 35a via the upper inner edge flange portions 67c such that the connecting surface portion 61 extends downward toward the vehicle-width-direction inner side. As shown in FIG. 6, FIG. 7, and FIG. 9, the rear floor panel 2 may be provided in such a way as to linearly extend in the vehicle width direction at the height position of the upper inner fixation portions w6e (see FIG. 9) (inner fixation portion) at which the connecting surface portion 61 is fixed to the lower inner edge flange portion 35a, the rear floor panel 2 constituting, in cooperation with the intermediate rear cross member 55, the closed cross-section portion 56 extending in the vehicle width direction.

With such a configuration, the intermediate rear cross member 55 can efficiently transmit a load toward the vehicle-width-direction inner side in cooperation with the rear floor panel 2, the load being input to the suspension housing 4 from the rear suspension damper 120 (see FIG. 6) during normal traveling, and being transmitted through the connecting surface portion 61.

Further particularly, as shown in FIG. 3 and FIG. 9, the intermediate rear cross member 55 includes the lower wall 55a, and the front wall 55b and the rear wall 55c (side walls), the lower wall 55a extending in the front-rear direction, the front wall 55b and the rear wall 55c extending upward from both front and rear end portions of the lower wall 55a. As shown in FIG. 3, both of the front-rear position of the front lower ridge 552 and the front-rear position of the rear lower ridge 554 overlap with the front-rear position of the joint member 60, the front lower ridge 552 (front ridge) being formed in the vehicle width direction by the corner portion between the lower wall 55a and the front wall 55b, the rear lower ridge 554 (rear ridge) being formed in the vehicle width direction by the corner portion between the lower wall 55a and the rear wall 55c on the rear side.

With such a configuration, both of the front-rear positions of the front lower ridge 552 and the rear lower ridge 554 of the intermediate rear cross member 55 overlap with the front-rear position of the joint member 60, the front lower ridge 552 and the rear lower ridge 554 extending in the vehicle width direction and hence, it is possible to increase efficiency of transmitting a load from the suspension to the intermediate rear cross member 55 through the joint member 60.

Further particularly, as shown in FIG. 2, the front-rear position of the front lower ridge 552 of the intermediate rear cross member 55 overlaps with the front-rear position of the front upper ridge 602 (ridge) formed on the joint member 60 in the vehicle width direction, and the front-rear position of the rear lower ridge 554 of the intermediate rear cross member 55 overlaps with the front-rear position of the rear upper ridge 604 (ridge) formed on the joint member 60 in the vehicle width direction (see the virtual straight lines La in FIG. 2).

With such a configuration, when a load is input from the rear suspension damper 120 (see FIG. 9) during normal traveling, the load can be transmitted on the front side of the joint member 60 and the intermediate rear cross member 55 from the front upper ridge 602 along the front lower ridge 552, and the load can be transmitted on the rear side of the joint member 60 and the intermediate rear cross member 55 from the rear upper ridge 604 along the rear lower ridge 554 and hence, it is possible to further increase efficiency of transmitting the load from the joint member 60 to the intermediate rear cross member 55.

Further particularly, as shown in FIG. 2, FIG. 9, FIG. 10(a), and FIG. 10(b), the joint member 60 may include the front inner fixation portion w6f and the rear inner fixation portion w6g (inner fixation portions) that are fixed to the inner wall 33 of the rear frame 3 from the outer side in the vehicle width direction, the intermediate rear cross member 55 may include the front outer fixation portion w5a and the rear outer fixation portion w5b (outer fixation portions) that are fixed to the inner wall 33 of the rear frame 3 from the inner side in the vehicle width direction, the front-rear position of the front inner fixation portion w6f may overlap with the front-rear position of the front outer fixation portion w5a, and the front-rear position of the rear inner fixation portion w6g may overlap with the front-rear position of the rear outer fixation portion w5b.

With such a configuration, when a load is input from the suspension during normal traveling, it is possible to further increase efficiency of transmitting the load from the joint member 60 to the intermediate rear cross member 55 through the rear frame 3.

Further particularly, as shown in FIG. 8, the joint member 60 is formed into a shape having a lower opening therein that is open downward in cross section in the front-rear direction, and the joint member 60 is fixed to the rear frame 3 such that the lower opening is closed by the lower wall 32 of the rear frame 3.

With such a configuration, the joint member 60 can constitute the closed cross-section portion 6s between the joint member 60 and the lower wall 32 of the rear frame 3 in cooperation with the rear frame 3, which closes the lower opening, and hence, it is possible to increase rigidity of the joint member 60.

Accordingly, it is possible to further suppress inward falling deformation of the suspension housing 4 during normal traveling, and bending deformation of the narrowed width portion 37 in a rear-end collision.

Further particularly, as shown in FIG. 6, the front-rear position of the lower outer fixation portion w5c (lower fixation portion) overlaps with the front-rear position of the joint member 60, the lower outer edge flange portion 55h of the intermediate rear cross member 55 being fixed to the lower wall 32 of the rear frame 3 from below at the lower outer fixation portion w5c.

With such a configuration, the front-rear position of the lower outer fixation portion w5c overlaps with the front-rear position of the joint member 60 and hence, it is possible to increase load transmission efficiency of the intermediate rear cross member 55 from the suspension housing 4 through the joint member 60.

Further particularly, as shown in FIG. 6, the rear frame 3 includes the lower front member 131F (rear frame front portion) and the lower rear member 131R (rear frame rear portion), and the joint member 60 is fixed to the superimposed and connected part 131C between the lower front member 131F and the lower rear member 131R (a coupled part at which the rear frame front portion and the rear frame rear portion are superimposed on each other).

With such a configuration, it is possible to reinforce the superimposed and connected part 131C between the lower front member 131F and the lower rear member 131R by the joint member 60 fixed to the superimposed and connected part 131C and it is possible to enhance efficiency of transmitting a load from the joint member 60 to the rear frame 3 when the load is input from the rear suspension damper 120 to the suspension housing 4 toward the vehicle-width-direction inner side during normal traveling.

In the correspondence between the components of the present invention and the above-described embodiment, a vehicle corresponds to an automobile and, hereinafter, in the same manner,
a floor panel may correspond to the rear floor panel 2,
a frame may correspond to the rear frame 3,
an inner flange portion may correspond to the lower inner edge flange portion 35a,
a cross member may correspond to the intermediate rear cross member 55,
a lower wall may correspond to the lower wall 55a,
a front side wall may correspond to the front wall 55b,
a rear side wall may correspond to the rear wall 55c,
a rear frame front portion may correspond to the lower front member 131F,
a rear frame rear portion may correspond to the lower rear member 131R,
a coupled part at which the rear frame front portion and the rear frame rear portion are superimposed on each other may correspond to the superimposed and connected part 131C,
a front ridge may correspond to the front lower ridge 552 of the intermediate rear cross member 55,
a rear ridge may correspond to the rear lower ridge 554 of the intermediate rear cross member 55,
ridges of a joint member may correspond to the front upper ridge 602 and the rear upper ridge 604 of the joint member 60,
outer fixation portions may correspond to the front outer fixation portion w5a and the rear outer fixation portion w5b,
a lower fixation portion may correspond to the lower outer fixation portion w5c,
a first inner fixation portion may correspond to the upper inner fixation portion w6e,
second inner fixation portions may correspond to the front inner fixation portion w6f and the rear inner fixation portion w6g, and
a suspension may correspond to the rear suspension damper 120. However, the present invention is not limited to only the configuration of the above-described embodiment, and many embodiments can be obtained.

For example, the present embodiment adopts the configuration in which both of the front-rear positions of the front lower ridge 552 (front ridge) and the rear lower ridge 554 (rear ridge) of the intermediate rear cross member 55 overlap with the front-rear position of the joint member 60. However, the present invention may adopt a configuration in which either one of these ridges 552, 554 is provided at a front-rear position that overlaps with the joint member 60.

The present embodiment adopts the configuration in which the front-rear position of the front lower ridge 552 (front ridge) of the intermediate rear cross member 55 overlaps with the front-rear position of the front upper ridge 602 (ridge) of the joint member 60, and the front-rear position of the rear lower ridge 554 (rear ridge) of the intermediate rear cross member 55 overlaps with the front-rear position of the rear upper ridge 604 (ridge) of the joint member 60. However, the present invention may adopt a configuration in which only either of the front-rear positions of the front ridges of the intermediate rear cross member 55 and the joint member 60 or the front-rear positions of the rear ridges of the intermediate rear cross member 55 and the joint member 60 overlap with each other.

Further, the present embodiment adopts, for example, the configuration in which the front-rear position of the front inner fixation portion w6f of the joint member 60 overlaps with the front-rear position of the front outer fixation portion w5a of the intermediate rear cross member 55, and the front-rear position of the rear inner fixation portion w6g of the joint member 60 overlaps with the front-rear position of the rear outer fixation portion w5b of the intermediate rear cross member 55. However, the present invention may adopt a configuration in which only either of the front-rear positions of the front fixation portions w6f, w5a or the front-rear positions of the front fixation portions w6g, w5b overlap with each other.

### [Reference Signs List]

V1 lower vehicle-body structure
2 rear floor panel (floor panel)
3 rear frame (frame)
3s closed cross-section portion of rear frame
4 suspension housing
33 inner wall of rear frame
35a lower inner edge flange portion (inner flange portion)
37 narrowed width portion
41 damper mounting surface portion
46 opening portion of damper mounting surface portion
55 intermediate rear cross member (cross member)
56 closed cross-section portion of intermediate rear cross member
60 joint member
61 connecting surface portion
55a lower wall of rear frame
55b front wall (front side wall)
55c rear wall (rear side wall)
55h lower outer edge flange portion (fixation portion) of intermediate rear cross member
131F lower front member (rear frame front portion)
131R lower rear member (rear frame rear portion)
131C superimposed and connected part (coupled part at which rear frame front portion and rear frame rear portion are superimposed on each other)
552 front lower ridge (front ridge) of intermediate rear cross member
554 rear lower ridge (rear ridge) of intermediate rear cross member
602 front upper ridge of joint member (ridge of joint member)
604 rear upper ridge of joint member (ridge of joint member)
w6f front inner fixation portion (second inner fixation portion)
w6g rear inner fixation portion (second inner fixation portion)
w6e upper inner fixation portion (first inner fixation portion)
w5a front outer fixation portion (outer fixation portion)
w5b rear outer fixation portion (outer fixation portion)
w5c lower outer fixation portion (lower fixation portion)

## Claims

1. A lower vehicle-body structure (V1) of a vehicle, the lower vehicle-body structure (V1) comprising:
a frame (3) that constitutes a closed cross-section portion (3s) extending in a front-rear direction on a vehicle-width-direction outer side of a floor panel (2); and
a suspension housing (4), the suspension housing (4) being provided to the frame (3), and supporting a suspension (120), wherein
the suspension housing (4) includes a damper mounting surface portion (41), and a peripheral wall (42) extending downward from a peripheral edge of the damper mounting surface portion (41),
at a part of the frame adjacent to a vehicle-width-direction inner side of the suspension housing (4) or located at a vehicle-width-direction inner side of the suspension housing (4), the frame (3) includes a narrowed width portion (37) in which a dimension in a vehicle width direction of the closed cross-section portion (3s) is reduced compared with a part of the frame adjacent to the suspension housing (4) in the front-rear direction or located in front of and/or behind the suspension housing (4),
the lower vehicle-body structure (V1) further comprises:
a cross member (55) which is provided inward of the frame (3) in the vehicle width direction, the cross member (55) extending in the vehicle width direction and being disposed at a same front-rear position as the suspension housing (4); and
a load transmission portion (60) which is provided to the narrowed width portion (37), the load transmission portion (60) connecting the suspension housing (4) with the cross member (55).

2. The lower vehicle-body structure (V1) according to claim 1, wherein
the suspension housing (4) is made of sheet metal.

3. The lower vehicle-body structure (V1) according to claim 1 or 2, wherein
the load transmission portion (60) is configured to connect the suspension housing (4) with the cross member (55) in such a way as to allow transmission of an input load from the suspension housing (4) to the cross member (55), and/or
the input load is input from the suspension (120).

4. The lower vehicle-body structure (V1) according to any one of the preceding claims, wherein
the narrowed width portion (37) has a first width in the vehicle width direction,
the frame (3) has a second width in the vehicle width direction in front of and/or behind the suspension housing (4), and
the first width is smaller than the second width.

5. The lower vehicle-body structure (V1) according to any one of the preceding claims, wherein
the frame (3) has the smallest width in the vehicle width direction at the narrowed width portion (37).

6. The lower vehicle-body structure (V1) according to any one of the preceding claims, wherein
the frame (3) is configured to curve along the suspension housing (4) at the narrowed width portion (37) .

7. The lower vehicle-body structure (V1) according to any one of the preceding claims, wherein a front-rear position of the load transmission portion (60) overlaps with a front-rear position of an opening portion (46) formed in the damper mounting surface portion (41) in a penetrating manner in an up-down direction.

8. The lower vehicle-body structure (V1) according to any one of the preceding claims, wherein
a vehicle-width-direction inner side of the frame (3) has an inner flange portion (35a) to which the floor panel (2) is fixed,
the load transmission portion (60) includes a connecting surface portion (61) that is configured to connect a vehicle-width-direction inner part of the peripheral wall (42) with the inner flange portion (35a) such that the connecting surface portion (61) extends downward toward a vehicle-width-direction inner side,
the floor panel (2) is provided in such a way as to linearly extend in the vehicle width direction at a height position of a first inner fixation portion (w6e) at which the connecting surface portion (61) is fixed to the inner flange portion (35a), and
the floor panel (2) is configured to constitute, in cooperation with the cross member (55), a closed cross-section portion (56) extending in the vehicle width direction.

9. The lower vehicle-body structure (V1) according to any one of the preceding claims, wherein
the cross member (55) includes a lower wall (55a) extending in the front-rear direction, and side walls (55b, 55c) extending upward from both front and rear end portions of the lower wall (55a), and
a front-rear position of at least one of a front ridge (552) and a rear ridge (554) is configured to overlap with a front-rear position of the load transmission portion (60), the front ridge (552) being formed in the vehicle width direction by a corner portion between the lower wall (55a) and a front side wall (55b) of the side walls (55b, 55c), the rear ridge (554) being formed in the vehicle width direction by a corner portion between the lower wall (55a) and a rear side wall (55c) of the side walls (55b, 55c).

10. The lower vehicle-body structure (V1) according to claim 9, wherein the front-rear position of the at least one of the front ridge (552) and the rear ridge (554) of the cross member (55) overlaps with a front-rear position of a ridge (602, 604) formed on the load transmission portion (60) in the vehicle width direction.

11. The lower vehicle-body structure (V1) according to any one of the preceding claims, wherein a front-rear position of a second inner fixation portion (w6f, w6g) overlaps with a front-rear position of an outer fixation portion (w5a, w5b), the load transmission portion (60) being fixed to an inner wall (33) of the frame (3) from an outer side in the vehicle width direction at the second inner fixation portion (w6f, w6g), the cross member (55) being fixed to the inner wall (33) of the frame (3) from an inner side in the vehicle width direction at the outer fixation portion (w5a, w5b).

12. The lower vehicle-body structure (V1) according to any one of the preceding claims, wherein
the load transmission portion (60) is formed into a shape having a lower opening therein that is open downward in cross section in the front-rear direction, and
the load transmission portion (60) is fixed to the frame (3) such that the lower opening is closed by a lower wall (55a) of the frame (3).

13. The lower vehicle-body structure (V1) according to any one of the preceding claims, wherein
a front-rear position of a lower fixation portion (w5c) overlaps with a front-rear position of the load transmission portion (60), the cross member (55) being fixed to a lower wall (55a) of the frame (3) from below at the lower fixation portion (w5c).

14. The lower vehicle-body structure (V1) according to any one of the preceding claims, wherein
the frame (3) includes a frame front portion (131F) and a frame rear portion (131R), and
the load transmission portion (60) is fixed to a coupled part at which the frame front portion (131F) and the frame rear portion (131R) are superimposed on each other.

15. A vehicle comprising the lower vehicle-body structure (V1) according to any one of the preceding claims.
